# EUROPEAN PATENT SPECIFICATION

(11) **EP 1 236 002 B1**
(45) Date of publication and mention of the grant of the patent: **17.08.2005**
(21) Application number: 00977735.0
(22) Date of filing: 24.11.2000
(51) Int. Cl.: F16L 21/03

(54) **SEAL**
DICHTUNG
JOINT D'ETANCHEITE

(30) Priority: 24.11.1999 GB 9927785
(43) Date of publication of application: 04.09.2002
(73) Proprietor: Forsheda AB, 330 12 Forsheda (SE)
(72) Inventor: CAVKA, Elvir, S-331 41 Varnamo (SE); GUSTAFSSON, Leif, S-331 95 Varnamo (SE)
(74) Representative: Hogg, Jeffery Keith
(86) International application number: PCT/GB2000/004495
(87) International publication number: WO 2001/038770

(56) References cited:
- EP-A- 0 159 385
- EP-A- 0 326 719
- WO-A-99/51387

## Description

This invention relates to pipe seals, especially pipe seals for unpressurised joints between plastic pipes with a preformed groove for the seal. Such seals are for example known from EP-A-0 326 719.

Pipe seals are ring shaped elastomer seals that are located in a groove in one pipe or pipe fitting that is to be connected with a second pipe or pipe fitting, with the seal located circumferentially between the two pipes. Generally, a pipe seal must be made within specified tolerances to fit a particular size of pipe and groove. An object of the invention is to provide an improved pipe seal that can fit a range of groove sizes.

According to a first aspect of the present invention, there is provided a pipe seal suitable for use in a groove in a pipe wall to form a seal between two concentric pipes, the seal comprising an annular carrier member and an annular sealing member attached to the carrier member and having a portion which extends longitudinally of the pipe so as to engage a radially extending side wall of the groove with the carrier member in engagement with an adjacent side wall of the groove; characterised in that the carrier member is resiliently deformable such that the seal can be inserted into the groove preformed in the pipe wall.

Preferably, said adjacent side wall of the groove is inclined so that contact with the carrier as the latter is urged radially into the groove serves to urge the carrier longitudinally towards said side wall of the groove engaged by the sealing member. For example, said adjacent side wall may have a curved portion which forms a rounded corner with the base of the groove.

Preferably, the carrier comprises a U-section member which is received within the depth of the groove with the two arms of the U-section extending longitudinally of the groove. That arm in the base of the groove extends longitudinally further than the other arm so as to engage the adjacent side wall of the groove, and thereby locate the seal longitudinally. Typically, the carrier is composed of a plastics material.

Preferably, the sealing member is located generally on that side of the carrier opposite the open channel of the U-section, and has a flange that extends longitudinally sufficiently to engage the adjacent side wall of the groove and bend back on itself so as to be urged into sealing engagement with the side wall. The length of the flange in relation to the overall width of the seal is selected to accommodate a range of groove widths.

The sealing member also has portions that extend radially inwardly and outwardly of the carrier to seal with the base of the groove on the one side, and seal with the pipe on the other side. That portion that seals with the base of the groove may comprise a longitudinally extending annular flange with a side face that stands radially proud of the carrier to engage the base of the groove in face-to-face contact. That portion that seals with the pipe may comprise a radially extending flange with an inclined face to engage with, and be deflected by, the pipe when both pipes are fitted together.

According to a further feature of the invention, the longitudinally extending flange that seals with the side wall of the groove is aligned with the open channel in the U-section carrier so that multiple seals can be stacked together with the flange of one engaging the channel in another carrier.

According to a second aspect of the present invention, there is provided a method of forming a seal between two concentric pipes comprising providing a pipe seal in a groove in the side wall of a first pipe and engaging said first pipe concentrically with a second pipe so that the pipe seal co-operates with a side wall of said second pipe to form a seal between the two pipes, the seal comprising an annular carrier member that engages a first radial extending side wall of the groove and an annular sealing member attached to the carrier member and having a portion which extends longitudinally of the pipe so as to engage a second radially extending side wall of the groove; characterised in that the carrier member is resiliently deformable and the pipe seal is deformed and inserted into a preformed groove in said wall of the first pipe.

The invention will now be described by way of example with reference to the accompanying drawings.
Figure 1 shows a section through a pipe seal according to the invention.
Figure 2 shows the pipe seal of Figure 1 inserted into a groove in a pipe.
Figure 3 shows the pipe seal of Figure 2 with a second pipe inserted into the first, past the seal.
Figure 4 is similar to Figure 3 and shows the pipe seal fitted into a wider groove than that of Figure 3, and
Figure 5 shows a number of pipe seals according to the invention which are stacked axially together.

The illustrated pipe seal comprises a U-section carrier 1 composed of a semi-rigid plastics material such that the carrier can be resiliently deformed for insertion into an internal groove 2 of a plastic pipe 3, and will resume its normal shape when released. The two arms 4, 5 of the U-section extend axially, and the outermost arm 4 is the longer, and its tip is adapted to engage an adjacent side wall 6 of the groove 2 to locate the seal axially.

An elastomeric sealing member 7 is bonded to the carrier 1 as an integral part of the seal, on that side of the carrier opposite the open channel 8 of the U-section. The sealing member 7 has three principle portions 12, 15 and 17 that seal respectively with the base 9 of the groove, the second pipe 11 that is inserted into the first pipe 3, and the adjacent side wall 10 of the groove.

The first portion 12 of the sealing member that seals with the base of the groove takes the form of a flange which extends axially away from the carrier and stands proud of the outer surface 13 of the carrier so as to engage the base of the groove. This flange 12 is formed with a series of circumferential grooves 14 in its outer surface so as to produce additional sealing lips to engage the base of the groove.

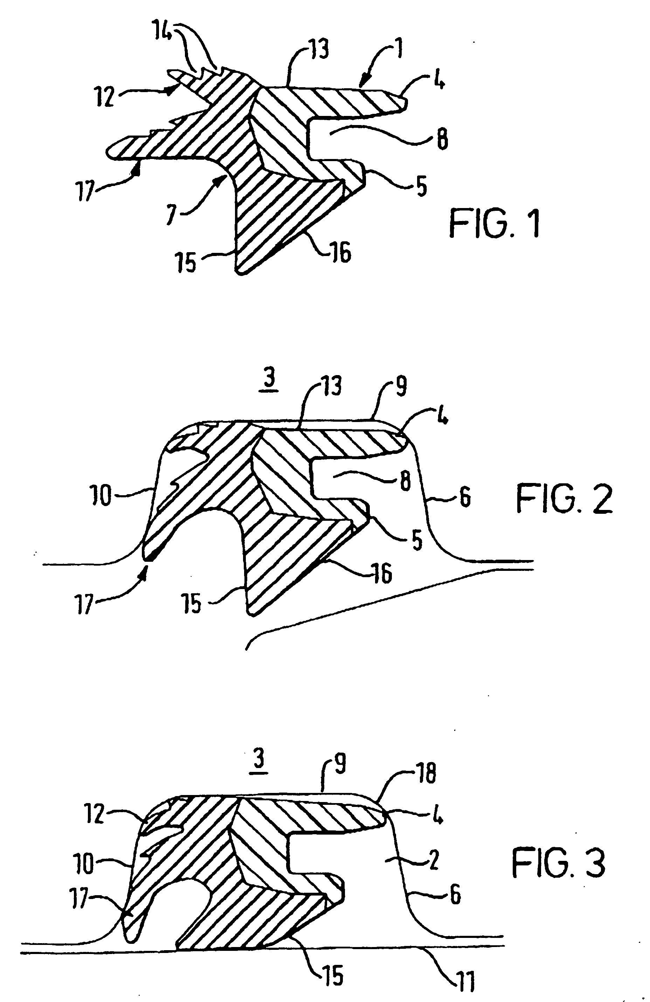

The second portion 15 of the sealing member which engages the second pipe 11 comprises a radially inwardly extending flange with an inclined face 16 directed towards the open end of the first pipe 3 so as to be engaged and deflected by the end of the second pipe 11 when it is inserted, as shown in Figures 2 and 3. This deflection of the flange 15 creates a compressive load within it which serves to maintain the sealing action between the two pipes.

The third portion 17 of the sealing member extends axially away from the carrier between the first and second flanges 12, 15 in substantially axial alignment with the open channel 8 in the carrier. If this third flange 17 is long enough to engage the adjacent side wall 10 of the groove and bend when inserted into it, as shown in Figures 2 and 3, the bending stress serves to urge the flange 17 into sealing engagement with the side wall 10 of the groove. Also, internal pressurisation of the pipes, when in use, will pressurise the space between the second and third flanges 15, 17 and compress the sealing member in a manner which increases the sealing forces at the sealing surfaces.

The outer face of the third flange 17 is tapered and formed with circumferential grooves 19 so as to increase its flexibility for insertion into the groove.

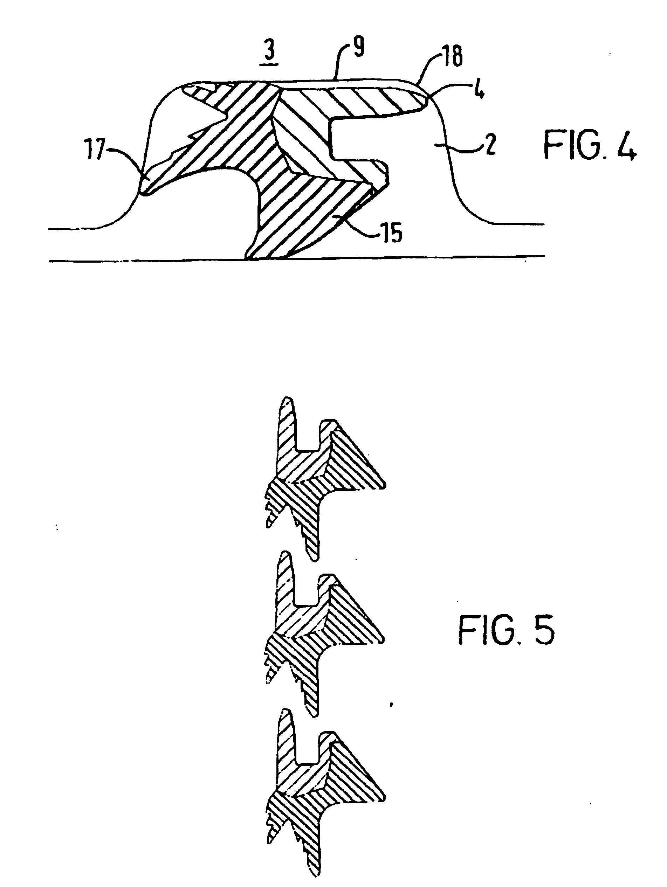

As shown in Figure 4, a seal according to the invention can be fitted into a wider groove 2 and will still produce an effective sealing action. This is due to the fact that the extended length of the third flange 17 will still allow it to engage the adjacent side wall 10 of the groove, although it will not be folded back on itself to the same extent as it would with a narrower groove. Also, it will be appreciated that the curved corner 18 between the side wall 6 and the base 9 serves to urge the seal axially towards the side wall 10 as the seal is forced radially into the groove, thereby enhancing the sealing contact between the flanges 12 and 17 and the side wall 10.

Finally, as illustrated in Figure 5, the seal according to the invention can be stored with multiple similar seals by stacking them together with the third flange 17 of each engaging the open channel 8 in the carrier 1 of an adjacent seal.

## Claims

1. A pipe seal suitable for use in a groove (2) in a pipe wall (3) to form a seal between two concentric pipes (3, 11), the seal comprising an annular carrier member (1) and an annular sealing member (7) attached to the carrier member (1) and having a portion (17) which extends longitudinally of the pipe so as to engage a radially extending side wall (10) of the groove (2) with the carrier member (1) in engagement with an adjacent side wall (6) of the groove; **characterised in that** the carrier member (1) is resiliently deformable such that the seal can be inserted into the groove (2) preformed in the pipe wall.

2. A seal as claimed in claim 1 in which the carrier member (1) comprises a U-section member which is received within the depth of the groove (2) with the two arms (4, 5) of the U-section extending longitudinally of the groove.

3. A seal as claimed in claim 2 in which one arm (4) in the base of the groove (2) extends longitudinally further than the other arm (5) so as to engage the adjacent side wall (6) of the groove (2) and locate the seal longitudinally.

4. A seal as claimed in claim 2 or 3 in which the sealing member (7) is located generally on that side of the carrier (1), opposite the open channel (8) to the U-section and has a flange (17) that extends longitudinally sufficiently to engage the adjacent side wall (10) of the groove (2) and bend back on itself to be urged into sealing engagement with the side wall.

5. A seal as claimed in any one of the preceding claims in which the sealing member (7) has one portion (12) that extends radially of the carrier (1) to seal with the base (9) of the groove (2).

6. A seal as claimed in claim 5 in which said one portion (12) comprises a longitudinally extending annular flange with a side face that stands radially proud of the carrier (1) to engage the base (9) of the groove (2) in face-to-face contact.

7. A seal as claimed in claim 6 in which said longitudinally extending annular flange (12) is aligned with the open channel (8) in the U-section carrier (1) so that multiple seals can nest together in storage.

8. A seal as claimed in any one of claims 5 to 7 in which the sealing member (7) has another portion (15) that extends radially of the carrier (1) to seal with an adjacent pipe (11).

9. A seal as claimed in claim 8 in which said other portion (15) comprises a radially extending flange with an inclined face (16) to engage, and be deflected by said adjacent pipe (11) when inserted into the other concentric pipe (3).

10. A pipe seal as claimed in any one of the preceding claims in combination with a pipe (3) having a side wall formed with an annular groove (2) to receive the seal, the groove extending longitudinally between two radially extending side walls (6, 10) and the longitudinally extending portion (17) of the sealing member engaging one of the side walls (10) of the groove and the carrier (1) engaging the other side wall (6) of the groove.

11. A pipe seal and pipe combination as claimed in claim 10 in which said other side wall (6) of the groove (2) is inclined from the radial so that radial loading from the carrier (1) serves to urge the carrier longitudinally towards said one side wall (10) engaged by the longitudinally extending portion (17) of the sealing member (7).

12. A method of forming a seal between two concentric pipes (3, 11) comprising providing a pipe seal in a groove (2) in the side wall of a first pipe (3) and engaging said first pipe (3) concentrically with a second pipe (11) so that the pipe seal co-operates with a side wall of said second pipe (11) to form a seal between the two pipes, the seal comprising an annular carrier member (1) that engages a first radial extending side wall (6) of the groove (2) and an annular sealing member (17) attached to the carrier member (1) and having a portion (17) which extends longitudinally of the pipe so as to engage a second radially extending side wall (10) of the groove; **characterised in that** the carrier member (1) is resiliently deformable and the pipe seal is deformed and inserted into a preformed groove in said wall of the first pipe (3).

## Patentansprüche

1. Rohrdichtung, welche geeignet ist zum Gebrauch in einer Nut (2) in einer Rohrwand (3), um eine Dichtung zwischen zwei konzentrischen Rohren (3, 11) zu bilden, wobei die Dichtung ein ringförmiges Trägerelement (1) und ein ringförmiges Dichtungselement (7) aufweist, das an dem Trägerelement (1) befestigt ist, und einen Abschnitt (17) besitzt, welcher sich in Längsrichtung des Rohres erstreckt, um mit einer sich radial erstreckenden Seitenwand (10) der Nut (2) in Eingriff zu stehen, wobei das Trägerelement (1) mit einer nahen Seitenwand (6) der Nut in Eingriff steht; **dadurch gekennzeichnet, dass** das Trägerelement (1) auf elastische Weise verformbar ist, so dass die Dichtung in die in der Rohrwand vorgeformte Nut (2) eingesetzt werden kann.

2. Dichtung nach Anspruch 1, bei welcher das Trägerelement (1) ein Element mit U-förmigem Querschnitt aufweist, das innerhalb der Nut (2) aufgenommen wird, wobei die zwei Arme (4, 5) des Abschnitts mit dem U-förmigen Querschnitt in Längsrichtung der Nut verlängern.

3. Dichtung nach Anspruch 2, bei welcher ein Arm (4) in der Basis der Nut (2) weiter in Längsrichtung vorsteht bzw. verläuft als der andere Arm (5), um mit der benachbarten Seitenwand (6) der Nut (2) in Eingriff zu stehen und die Dichtung in Längsrichtung anzuordnen.

4. Dichtung nach Anspruch 2 oder 3, bei welcher das Dichtungselement (7) im allgemeinen auf der Seite des Träger (1) gegenüber dem offenen Kanal (8) des Abschnitts mit U-förmigem Querschnitt angeordnet ist und einen Flansch (17) besitzt, welcher sich in Längsrichtung weit genug erstreckt, um mit der benachbarten Seitenwand (10) der Nut (2) in Eingriff zu stehen und sich auf sich selbst zurückzubiegen, um in einen Dichtungseingriff mit der Seitenwand gedrückt zu werden.

5. Dichtung nach einem der vorangehenden Ansprüche, bei welcher das Dichtungselement (7) einen Abschnitt (12) besitzt, welcher radial zum Träger (1) verläuft, um mit der Basis (9) der Nut (2) abzudichten.

6. Dichtung nach Anspruch 5, bei welcher der eine Abschnitt (12) einen in Längsrichtung verlaufenden ringförmigen Flansch mit einer Seitenfläche aufweist, welche radial von dem Träger (1) vorstehe, um mit der Basis (9) der Nut (2) in einem einander gegenüberliegenden Kontakt in Eingriff zu stehen.

7. Dichtung nach Anspruch 6, bei welcher der in Längsrichtung verlaufende ringförmige Flansch (12) mit dem offenen Kanal (8) in dem Träger (1) mit U-förmigem Querschnitt ausgerichtet ist, so dass mehrere Dichtungen zusammen gelagert werden können.

8. Dichtung nach einem der Ansprüche 5 bis 7, bei welcher das Dichtungselement (7) einen anderen Abschnitt (15) besitzt, welcher radial zum Träger (1) verläuft, um mit einem benachbarten Rohr (1) abzudichten.

9. Dichtung nach Anspruch 8, bei welcher der andere Abschnitt (15) einen radial verlaufenden Flansch mit einer geneigten Fläche (16) besitzt, um mit dem zweiten Rohr (11) in Eingriff zu stehen und durch dasselbe gebogen zu werden, wenn er in das andere konzentrische Rohr (3) eingesetzt wird.

10. Rohrdichtung nach einem der vorangehenden Ansprüche in Kombination mit einem Rohr (3), welches eine Seitenwand besitzt, die mit einer ringförmigen Nut (2) gebildet ist, um die Dichtung aufzunehmen, wobei sich die Nut in Längsrichtung zwischen zwei radial verlaufenden Seitenwänden (6, 10) erstreckt und der in Längsrichtung verlaufende Abschnitt (17) des Dichtungselements mit einer der Seitenwände (10) der Nut in Eingriff steht und der Träger (1) mit der anderen Seitenwand (6) der Nut in Eingriff steht.

11. Rohrdichtung und Rohrkombination nach Anspruch 10, wobei die andere Seitenwand (6) der Nut (2) radial geneigt ist, so dass eine radiale Belastung durch den Träger (1) dazu dient, den Träger in Längsrichtung zu der einen Seitenwand (10) zu drücken, welche mit dem sich in Längsrichtung erstreckenden Abschnitt (17) des Dichcungselements (7) in Eingriff steht.

12. Verfahren zum Bilden einer Dichtung zwischen zwei konzentrischen Rohren (3, 11), welches die Anordnung einer Rohrdichtung in einer Nut (2) in der Seitenwand eines ersten Rohres (3) und einen Eingriff des ersten Rohres (3) auf konzentrische Weise mit einem zweiten Rohr (11) aufweist, so dass die Rohrdichtung mit einer seitenwand des zweiten Rohres (11) zusammenwirkt, um eine Dichtung zwischen den zwei Rohren zu bilden, wobei die Dichtung ein ringförmiges Trägerelement (1) aufweist, das mit einer ersten radial verlaufenden Seitenwand (6) der Nut (2) in Eingriff steht, und ein ringförmiges Dichtungselement (7), das an dem Trägerelement (1) befestigt ist, und einen Abschnitt (17) besitzt, welcher in Längsrichtung des Rohres verläuft, um mit einer zweiten radial verlaufenden seitenwand (10) der Nut in Eingriff zu stehen; **dadurch gekennzeichnet, dass** das Trägerelement (1) auf elastische weise verformbar ist und die Rohrdichtung verformt wird und in eine vorgeformte Nut in der Wand des ersten Rohres (3) eingesetzt wird.

## Revendications

1. Joint d'étanchéité de tube pour être utilisé dans une rainure (2) dans une paroi de tube (3) pour former un joint entre deux tubes concentriques (3, 11), le joint comprenant une membrure porteuse annulaire (1) et une membrure d'étanchéité annulaire (7) attachée à la membrure porteuse (1) et ayant une portion (17) qui s'étend longitudinalement le long du tuyau de façon à engager une paroi latérale (10) de la rainure (2) s'étendant radialement avec la membrure porteuse (1) en engagement avec une paroi latérale adjacente (6) de la rainure ; **caractérisé en ce que** la membrure porteuse (1) est déformable de façon résiliente de telle façon que le joint puisse être inséré dans la rainure (2) préformée dans la paroi du tube.

2. Joint selon la revendication 1 dans lequel la membrure porteuse (1) comprend une membrure à section en U qui est reçue dans la profondeur de la rainure (2) avec les deux bras (4, 5) de la section U s'étendant longitudinalement le long de la rainure.

3. Joint selon la revendication 2 dans lequel un bras (4) dans la base de la rainure (2) s'étend longitudinalement plus loin que l'autre bras (5) de façon à engager la paroi latérale adjacente (6) de la rainure (2) et localiser le joint longitudinalement.

4. Joint selon la revendication 2 ou 3 dans lequel la membrure d'étanchéité (7) est localisée de façon générale sur ce côté de la membrure porteuse (1), à l'opposé du canal ouvert (8) de la section U et possède un flasque (17) qui s'étend longitudinalement suffisamment pour engager la paroi latérale adjacente (10) de la rainure (2) et se recourber sur lui-même pour être poussé en engagement d'étanchéité avec la paroi latérale.

5. Joint selon l'une des revendications précédentes dans lequel la membrure d'étanchéité (7) a une portion (12) qui s'étend radialement depuis la membrure porteuse (1) pour créer une étanchéité avec la base (9) de la rainure (2).

6. Joint selon la revendication 5 dans lequel une portion (12) comprend un flasque annulaire s'étendant longitudinalement avec une face latérale qui ressort radialement de la membrure porteuse (1) pour engager la base (9) de la rainure (2) en contact face à face.

7. Joint selon la revendication 6 dans lequel le flasque annulaire (12) s'étendant longitudinalement est aligné avec le canal ouvert (8) dans la membrure porteuse (1) à section en U de façon que des joints multiples puissent se loger ensemble pendant le stockage.

8. Joint selon l'une des revendications 5 à 7 dans lequel la membrure d'étanchéité (7) a une autre portion (15) qui s'étend radialement par rapport à la membrure porteuse (1) pour s'étanchéifier avec un tube adjacent (11).

9. Joint selon l'une des revendications 8 dans lequel l'autre portion (15) comprend un flasque s'étendant radialement avec une face inclinée (16) pour s'engager et pour être défléchi par ledit tube adjacent (11) quand il est inséré dans l'autre tube concentrique (3).

10. Joint de tube selon l'une des revendications précédentes en combinaison avec un tube (3) ayant une paroi latérale formée d'une rainure annulaire (2) pour recevoir le joint, la rainure s'étendant longitudinalement entre deux parois latérales s'étendant radialement (6, 10) et la portion s'étendant longitudinalement (17) de la membrure d'étanchéité engageant l'une des parois latérales (10) de la rainure et la membrure porteuse (1) engageant l'autre paroi latérale (6) de la rainure.

11. Combinaison de joint de tube et de tube selon la revendication 10, dans laquelle l'autre paroi latérale (6) de la rainure (2) est inclinée par rapport à la direction radiale de sorte que la charge radiale de la membrure porteuse (1) sert à pousser la membrure porteuse longitudinalement vers ladite paroi latérale (10) engagée par la portion (17) de la membrure d'étanchéité (7) s'étendant longitudinalement.

12. Procédé de formage d'un joint entre deux tubes concentriques (3, 11) comprenant la fourniture d'un joint de tube dans une rainure (2) dans la paroi latérale d'un premier tube (3) et l'engagement dudit premier tube (3) de façon concentrique avec un second tube (11) de façon que le joint de tube coopère avec une paroi latérale dudit second tube (11) pour former un joint entre les deux tubes, le joint comprenant une membrure porteuse annulaire (1) qui engage une première paroi latérale (6) s'étendant radialement de la rainure (2) et une membrure d'étanchéité annulaire (17) attachée à la membrure porteuse (1) et ayant une portion (17) qui s'étend longitudinalement par rapport au tuyau de façon à engager une seconde paroi latérale s'étendant radialement (10) depuis la rainure ; **caractérisé en ce que** la membrure porteuse (1) est déformable de façon résiliente et **en ce que** le joint de tube est déformé et inséré dans une rainure préformée dans ladite paroi du premier tube (3).
